# EUROPEAN PATENT APPLICATION

(11) **EP 3 439 225 A1**
(43) Date of publication of application: **06.02.2019**
(21) Application number: 17306033.6
(22) Date of filing: 02.08.2017
(51) Int. Cl.: H04L 9/00, G06F 21/14, H04L 9/06

(54) **METHOD TO SECURE A SOFTWARE CODE PERFORMING ACCESSES TO LOOK-UP TABLES**

(71) Applicant: GEMALTO SA, 92190 Meudon (FR)
(72) Inventor: LEVEQUE, Sylvain, 92190 Meudon (FR); ADJEDJ, Michael, 92190 Meudon (FR)
(74) Representative: Bricks, Amélie

(57) **Abstract**

The present invention relates to a method of securing by a first processor of a securing device, a software code performing, when executed by an execution device, a sensitive operation performing accesses to a plurality of look-up tables (T₀, T₁, ... Tₙ),
wherein said software code comprises first sequences of instructions performing said accesses,
said method comprising the steps of:
- a) generating (S1) a packed table (T) gathering said look-up tables (To ,Ti, ... Tₙ),
- b) applying (S2) a permutation (P) to said packed table (T) to obtain a permuted table (Tₚ),
- c) replacing (S3) in the software code (SC) at least one of said first sequences of instructions, which when executed at runtime by a second processor of said execution device performs an access to a target value (X) located at a first index (i) in a first look-up table among said plurality of look-up tables by a new sequence of instructions which:
∘ c1) determines using said permutation (P) a permuted index (iₚ) of the target value (X) in the permuted table,
∘ c2) returns the value memorized at the permuted index in said permuted table (Tₚ).

## Description

### FIELD OF THE INVENTION

The present invention relates to the field of data obfuscation. It discloses an obfuscation method protecting against information extraction by an attacker from how the content of LUTs are accessed and used in a sensitive operation.

### BACKGROUND OF THE INVENTION

A typical example of a sensitive operation is a cryptographic process. Cryptographic processes are frequently used for protecting data, such as messages exchanged on a communication channel, from being accessed by an unauthorized user by encrypting it. Such processes are also used for authenticating the issuer of a message to ensure he is who he claims to be, for example.

Among such processes, block cipher algorithms such as AES are widely used. Such processes operate on blocks of data and usually perform several rounds of encryption.

In order to keep such processes secure, the secret keys used by such processes must remain secret, otherwise any attacker having knowledge of the secret key could decipher a ciphertext and the privacy of enciphered data would not be guaranteed anymore. Such an attacker could also generate forged signatures of a message as if he was the true owner of the secret key.

Traditionally, in order to ensure that the secret key remains secret, the decryption or signature algorithm is supposed to be executed in a secure environment only. The device executing such an algorithm is assumed trusted, preventing any attacker trying to decipher a secret message from accessing to the secret key.

However, cryptographic processes are more and more deployed in applications executed on open devices. For example many user devices now have access to the Internet, such as PCs, tablets, smartphones, and can be used for playing copyrighted digital content such as audio or video files. Such files may be cryptographically protected, for example using digital rights management (DRM), in order to make it available to a user only as long as the user has subscribed to an online multimedia streaming service.

Cryptographic processes are then executed in an environment where not all users or devices can be trusted. Such a context is usually called a white-box attack context, as the attacker has full access to the software implementation of the cryptographic processes. Binary code of such processes is completely accessible and editable by the attacker that can analyze the binary code of the cryptography application and, for example, memory pages or registers used for temporary storage during the execution. Such manipulation may, for example, be performed using debuggers and hardware emulation tools.

In order to keep the secret key secret in a whitebox environment, obfuscation methods have been developed that replace operations using the secret key by accesses to lookup tables (LUT). By doing so, an attacker monitoring the execution of a cryptographic process cannot spot anymore any access to the secret key. Nevertheless, such an attacker may gain enough information from monitoring accesses to such LUTs for finally retrieving the secret concealed in such LUTs. In particular, tables related to common operations such as a XOR operations may be used much more often during execution of the process than other tables related to specific operations, for example operations related to a given encryption round. Such usage differences may translate into distinct memory access patterns that an attacker can observe in order to identify which LUT is related to which operation and therefore which LUT shall be monitored in order to retrieve at least some part of the secret key.

Therefore, there is a need for a method enabling a secure execution of a sensitive operation using LUTs in a white-box environment.

### SUMMARY OF THE INVENTION

For this purpose and according to a first aspect, this invention therefore relates to a method of securing by a first processor of a securing device, a software code performing, when executed by an execution device, a sensitive operation performing accesses to a plurality of look-up tables, wherein said software code comprises first sequences of instructions performing said accesses, said method comprising the steps of:
- a) generating, by the first processor, a packed table gathering said look-up tables,
- b) applying, by the first processor, a permutation to said packed table to obtain a permuted table,
- c) replacing, by the first processor, in the software code at least one of said first sequences of instructions, which when executed at runtime by a second processor of said execution device performs an access to a target value located at a first index in a first look-up table among said plurality of look-up tables by a new sequence of instructions which:
   ∘ c1) determines using said permutation a permuted index of the target value in the permuted table,
   ∘ c2) returns the value memorized at the permuted index in said permuted table.

Such a method enables to obtain a secure software code which when executed prevents an attacker from easily determining which LUT is accessed at some step of the sensitive operation and from extracting from it sensitive information.

In an embodiment, said new sequence of instructions, when executed at runtime, c0) determines a packed-table index of the target value in the packed table, and at step c1) determines said permuted index from said permutation and said packed-table index.

Such an embodiment enables to link the index of the target value in the first lookup table to its index in the packed table and then to retrieve its index in the permuted table by just applying a permutation.

Said packed table may be generated by concatenating said plurality of look-up tables.

Said permutation may be a random permutation.

It makes it more difficult for an attacker having access to the software code to gain knowledge of the permutation and to retrieve from it sensitive information used in the sensitive operation.

In a first embodiment, said permutation is stored by the execution device as an array comprising the order of the indexes of the packed table in the permuted table and step c1) computes at runtime the permuted index by extracting said permuted index memorized at said packed-table index in said array.

Such a first embodiment enables to memorize any permutation, even a randomly defined permutation and to use it to find the permuted index from the first index.

In a second embodiment, said permutation is a predetermined transformation function which transforms the index of each value in the packed table into an index of said value in the permuted table, and step c1) computes at runtime a permuted index by applying said stored transformation function to said packed-table index.

By doing so the memory footprint of storing the permutation is greatly reduced compared to storing an array comprising the order of the indexes of the packed table in the permuted table.

According to a second aspect, this invention relates to a non-transitory machine-readable storage medium encoded with instructions of a secure software code for secure execution by a second processor of an execution device, wherein:
- said secure software code is a modified version of an unsecure software code performing a sensitive operation performing accesses to a plurality of look-up tables, said unsecure software code comprising first sequences of instructions performing said accesses,
- the non-transitory machine-readable storage medium is also encoded with:
   ✔ a permuted table generated by applying a permutation to a packed table gathering said plurality of look-up tables,
   ✔ a new sequence of instructions replacing at least one of said first sequences of instructions performing an access to a target value located at a first index in a first look-up table among said plurality of look-up tables, and which, when executed at runtime by the second processor of the execution device:
      ❖ c1) determines using said permutation a permuted index of the target value in the permuted table,
      ❖ c2) returns the value memorized at the permuted index in said permuted table.

According to a third aspect, this invention relates to a method of securely executing instructions of a secure software code by a second processor of an execution device, wherein:
- said secure software code is a modified version of an unsecure software code performing a sensitive operation performing accesses to a plurality of look-up tables, said unsecure software code comprising first sequences of instructions performing said accesses,
- a permuted table is generated by applying a permutation to a packed table gathering said plurality of look-up tables,
   when an access is performed to a target value located at a first index in a first look-up table among said plurality of look-up tables, said method comprises the steps of:
   ✔ c1) determining using said permutation a permuted index of the target value in the permuted table,
   ✔ c2) returning the value memorized at the permuted index in said permuted table.

Such a non-transitory machine-readable storage medium according to the second aspect and method according to the third aspect show the same advantages as the ones of the method according to the first aspect.

To the accomplishment of the foregoing and related ends, one or more embodiments comprise the features hereinafter fully described and particularly pointed out in the claims.

### BRIEF DESCRIPTION OF THE DRAWINGS

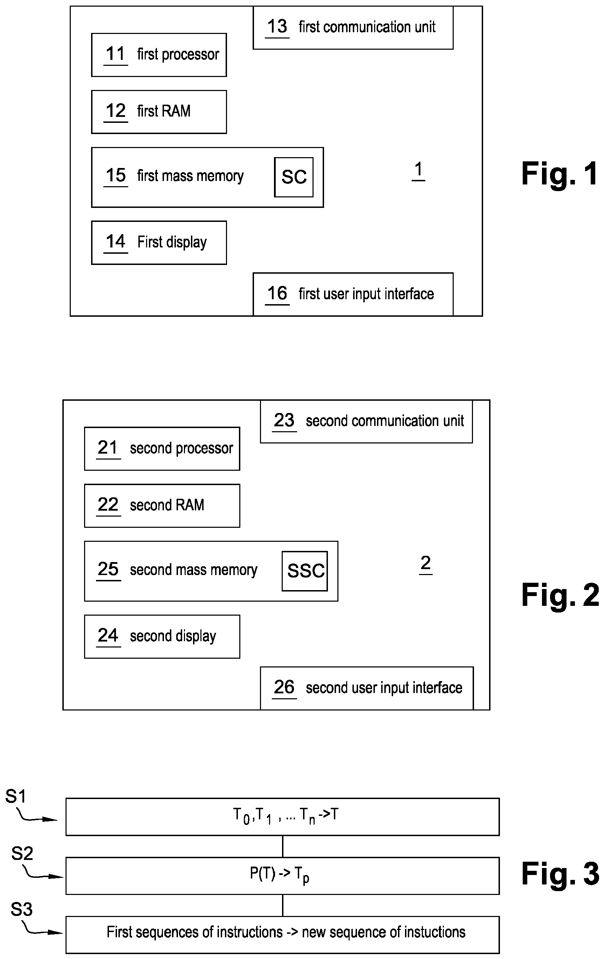

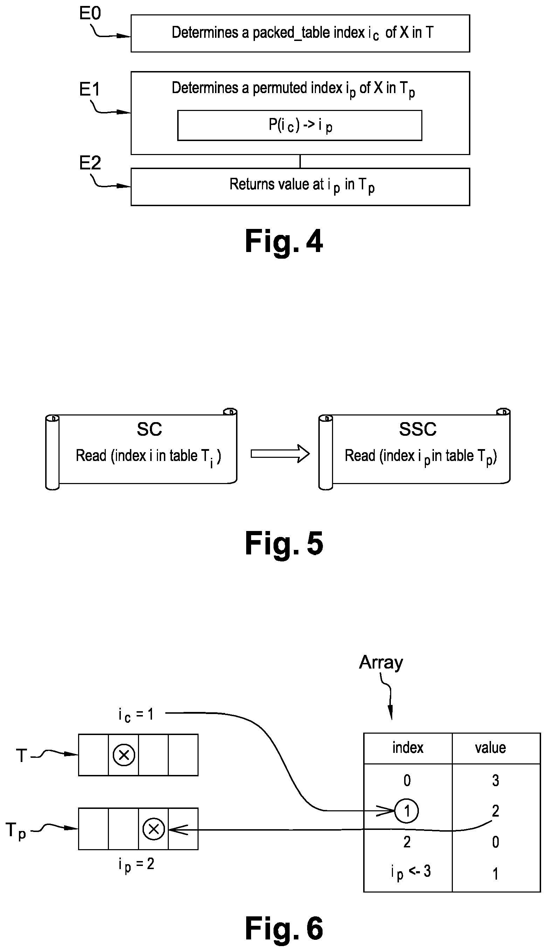

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
▪ Figure 1 illustrates schematically a securing device according to an embodiment of the present invention;
▪ Figure 2 illustrates schematically an execution device according to an embodiment of the present invention;
▪ Figure 3 illustrates schematically a method of securing a software code according to an embodiment of the present invention;
▪ Figure 4 illustrates schematically a method of executing instruction of a secure software code according to an embodiment of the present invention;
▪ Figure 5 illustrates step of replacing first sequences of instructions by a new sequence of instructions according to an embodiment of the present invention;
▪ Figure 6 illustrates an embodiment for storing the permutation as an array.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

The invention aims at securing a software code which when executed performs a sensitive operation comprising several accesses to a plurality of lookup tables, hereafter called LUTs. Such a sensitive operation may for example be a cryptographic process such as a blockcipher encryption process whose operations are coded as LUTs. It may for example be the well-known and widely used AES algorithm.

If no care is taken to protect a sensitive operation accessing values in LUTs, these accesses will often show a regularity in their arrangement, which can in turn be related to the structure of the sensitive operation itself. Another source of information is the way in which the LUTs themselves are organized, for example in terms of number of elements or number of times they are accessed, which can be related to the structure of the sensitive operation itself as well. In order to secure such a sensitive operation and avoid that an attacker may learn information about it, especially secret information such as secret keys, from monitoring the execution of the process, especially memory accesses when reading a value in a LUT, the main idea of the invention is to mix several LUTs altogether in a single larger LUT. By doing so, when a value is read in one of these LUTs, the attacker cannot easily know to which LUT this value belongs. It prevents the attacker from knowing which LUT embodies an operation using a sensitive data such as a secret key and from trying to retrieve this sensitive data by analyzing a specific LUT. Permuting the elements of a single LUT prevents an attacker from extracting information when accessing its elements only. Combining several LUTs together prevents an attacker from extracting information when accessing LUTs themselves, by blurring their boundaries.

In order to perform such a mixing, the software code SC performing such a sensitive operation is secured by the first processor 11 of a securing device 1, producing a secured software code SSC which can then be securely executed by an execution device 2.

Such a securing device 1 may be any electronic device including a processor For example it may be a personal computer PC on which a development environment was installed. **Figure 1** describes an exemplary embodiment of such a securing device 1 comprising a first processor 11, a first RAM memory 12, a first communication unit 13 such as an Ethernet or Wifi network adapter, a first display 14, a first mass memory 15 such as a hard drive, and first user input interface 16. The software code SC to be secured may be stored on the first mass memory 15 of the securing device. The secure software code SSC, obtained after the securing device 1 applies the method according to the first aspect to the software code SC, can also be stored on the first memory 15.

**Figure 2** describes an exemplary embodiment of the execution device 2. For example it may be a personal computer PC, a mobile device such as a smartphone or a tablet, or a public terminal in a bank or a point of sale. It may also be a simple chip included in a smart card or a credit card. It may comprise a second processor 21, a second RAM memory 22, a second communication unit 23 such as an Ethernet or Wifi network adapter, a second display 24, a second mass memory 25 such as a hard drive, and second user input interface 26. The secure software code SSC, to be executed by the second processor 21 of the execution device 2, may be stored on the second mass memory 25 of the executing device. The securing device 1 and the execution device 2 may be of similar or different types. Both devices may share the same hardware architecture, such as x86, ARM or PowerPC, or have different architectures.

Most steps of the embodiments described hereafter may be applied to the source code, or the compiled code of the sensitive operation. The following paragraphs will describe an application of the method according to the invention to the compiled code, called hereafter software code, but it shall not be interpreted as a limitation of the scope of the invention. The various arrangements that could be derived by a man skilled in the art by applying one or more of the steps of the invention to source code are included in the scope of the invention. For example, the steps of the method may be applied by a compiler during the compilation of the code, or to the source code before any compilation.

### Securing method main steps

The following paragraphs describe the steps of the method according to the first aspect of the invention, securing the software code SC and producing the secure software code SSC, as depicted on **Figure 3****.** These steps are performed by the first processor 11 of the securing device 1 and are all labeled with the letter "S" followed by the number of the step.

When needed, reference is made to steps performed by the execution device 2 when executing the secure software code SSC, after the method according to the first aspect is completed. Such execution steps are labeled with the letter "E" followed by the number of the step and depicted on **Figure 4****.**

During a first securing step S1, the first processor 11 generates a packed table T gathering multiple lookup tables T₀ ,T₁, ... Tₙ to which accesses are performed by first sequences of instructions of the sensitive operation. Such a packed table may for example be obtained by simply concatenating together all the tables in any order.

During a second securing step S2, the first processor 11 applies a permutation P to the packed table T, which generates a permuted table Tₚ. The permutation P may be predetermined. Alternatively it may be a random permutation generated before or when this second securing step is performed.

The permutation P may be applied to all the elements of the packed table T or only to a subset of these. Contrarily to the packed table which contains several blocks of elements such that all the elements of a block belong to the same LUT, the permuted table Tₚ mixes together all the elements of the LUTs T₀ ,T₁, ... Tₙ and an attacker cannot know which element or group of elements belong to which LUT without knowledge of the applied permutation.

In order to enable the sensitive operation to read elements in the permuted table Tₚ instead of reading it in the LUTs T₀ ,T₁, ... Tₙ, the first processor 11 of the securing device 1 replaces in the software code SC, during a third securing step S3, at least one of said first sequences of instructions by a new sequence of instructions which enable the second processor 21 of the execution device 2, when executing the sensitive operation, to read elements in the permuted table Tₚ.

More precisely, the second processor replaces at least one of said first sequences of instructions, which when executed at runtime by the second processor of the execution device performs an access to a target value X originally located at a first index i in a first look-up table among said plurality of look-up tables T₀ ,T₁, ... Tₙ packed in the packed table T by a new sequence of instructions which:
∘ during a first execution step E1, determines using said permutation P a permuted index iₚ of the target value X in the permuted table,
∘ during a second execution step E2, returns the value memorized at the permuted index in said permuted table Tₚ.

In order to compute the permuted index at the first execution step E1, the sequence of instructions, when executed at runtime by the second processor 21 of the execution device 2, may also during a preliminary execution step E0 determine a packed-table index i_{c} of the target value X in the packed table T. In that case, during the first execution step E1, the sequence of instructions may determine the permuted index iₚ of the target value in the permuted table from the permutation P and the packed-table index i_{c}. The permuted index iₚ may thus be obtained just by applying the permutation to the packed-table index i_{c}.

As an example, as illustrated on **figure 5****,** let us call Seq said new sequence of instructions, and Tᵢ the LUT table to which an access shall be performed in order to retrieve the target value X located at the index i in this LUT. The securing method according to the invention may replace any read command
*read(index i in table Tᵢ)*
   by a new command
*Seq(index i in table Tᵢ)*
   evaluated at runtime as
*read(permuted index iₚ in the permuted table Tₚ).*

By doing so, the sequence of instructions acts as a redirection function that redirects the read command to the location of the target value in the permuted table instead of reading it in the unprotected LUT Tᵢ.

In order to enable the secure software code to retrieve at runtime the target value X from the permuted table Tₚ, the second processor 21 of the execution device 2 shall have access to the permutation P and the permuted table Tₚ. They may be stored along with the secure software code in the second mass memory 25 of the execution device 2.

Different embodiments are possible for storing the permutation P.

In a first embodiment, the permutation may be stored as an array comprising the order of the indexes of the packed table in the permuted table. For example, as illustrated on **figure 6****,** if the indexes (0, 1, 2, 3) of the packed table are permuted to (3, 2, 0, 1), the permutation may be stored as the array (3, 2, 0, 1). In that case, during the first execution step E1, the second processor, when executing the new sequence of instructions, may compute the permuted index iₚ by extracting the permuted index memorized at the packed-table index i_{c} in the memorized array.

In a second embodiment, the permutation may be a predetermined transformation function which transforms the index of each value in the packed table T into the index of this value in the permuted table Tₚ. Let us take as an example the permutation turning indexes (0, 1, 2, 3) into (3, 0, 1, 2). In this example, the applied permutation is the function: X -> (X+3) mod 4. In that case the permutation may be stored by just memorizing this transformation function. During the first execution step E1, the second processor, when executing the new sequence of instructions, may then compute the permuted index iₚ by applying the stored transformation function P to the packed-table index i_{c}. This is more efficient than the previous embodiment in terms of memory consumption but it may only be applied to permutation which can be easily described by a transformation function. Consequently it may not be suited to all permutation, especially to randomly defined permutations.

### Other aspects

**In a second aspect,** the invention also relates to a non-transitory machine-readable storage medium encoded with the instructions of the secure software code SSC obtained after the first processor 11 of the securing device 1 has performed, on the software code SC called unsecure software code performing a sensitive operation performing accesses to a plurality of look-up tables (T₀ ,T₁, ... Tₙ) and comprising first sequences of instructions performing said accesses to the plurality of look-up tables (T₀ ,T₁, ... Tₙ), at least the securing steps S1 to S3 of the method according to the first aspect described here above. Said secure software code SSC is then a modified version of the unsecure software code SC on which said method according to the first aspect has been applied.

This non-transitory machine-readable storage medium is also encoded with:
- a permuted table Tₚ generated by applying a permutation P to a packed table T gathering said plurality of look-up tables T₀ ,T₁, ... Tₙ,
- and a new sequence of instructions replacing at least one of said first sequences of instructions performing an access to a target value X located at a first index i in a first look-up table among said plurality of look-up tables; and which, when executed at runtime by the second processor 21 of the execution device 2 performs the steps E1 to E2 described here above and illustrated on figure 4:
   - c1) determines using said permutation P a permuted index iₚ of the target value X in the permuted table,
   - c2) returns the value memorized at the permuted index in said permuted table Tₚ.

**In a third aspect,** the invention also relates to the method of executing the instructions of the secure software code, as executed by the second processor 21 of the executing device 2. Said secure software code SSC is then a modified version of the unsecure software code (the software code SC) performing a sensitive operation performing accesses to a plurality of look-up tables (T₀ ,T₁, ... Tₙ) and comprising first sequences of instructions performing said accesses to the plurality of look-up tables (T₀ ,T₁, ... Tₙ), on which the method according to the first aspect described here above has been applied. During the second securing step S2 described above, the permuted table Tₚ has been generated by applying a permutation P to a packed table T gathering said plurality of look-up tables (T₀ ,T₁, ... Tₙ),

As depicted on figure 4, when an access is performed to a target value X located at a first index i in a first look-up table among said plurality of look-up tables, said method according to the third aspect comprises the execution steps E1 to E2 described here above:
- c1) during the first execution step E1, the second processor 21 determines using said permutation P a permuted index iₚ of the target value X in the permuted table Tₚ,
- c2) during the second execution step E2, the second processor 21 returns the value memorized at the permuted index in said permuted table Tₚ.

In addition to these features, the non-transitory machine readable storage medium according to the second aspect of the invention and the method according to the third aspect of the invention may be configured for performing or may comprise any other features described here before.

As a result, the methods described above enable to securely access elements stored in LUTs without enabling an attacker to easily determine which LUT is accessed among several LUTs used in a sensitive operation, and to extract from it sensitive information.

## Claims

1. A method of securing by a first processor (11) of a securing device (1), a software code (SC) performing, when executed by an execution device (2), a sensitive operation performing accesses to a plurality of look-up tables (T₀ ,T₁, ... Tₙ),
wherein said software code comprises first sequences of instructions performing said accesses,
said method comprising the steps of:
- a) generating (S1), by the first processor, a packed table (T) gathering said look-up tables (T₀ ,T₁, ... Tₙ),
- b) applying (S2), by the first processor, a permutation (P) to said packed table (T) to obtain a permuted table (Tₚ),
- c) replacing (S3), by the first processor, in the software code (SC) at least one of said first sequences of instructions, which when executed at runtime by a second processor (21) of said execution device performs an access to a target value (X) located at a first index (i) in a first look-up table among said plurality of look-up tables by a new sequence of instructions which:
∘ c1) determines using said permutation (P) a permuted index (iₚ) of the target value (X) in the permuted table,
∘ c2) returns the value memorized at the permuted index in said permuted table (Tₚ).

2. The method of claim 1, wherein said new sequence of instructions, when executed at runtime, c0) determines a packed-table index (i_{c}) of the target value (X) in the packed table (T), and at step c1) determines said permuted index (iₚ) from said permutation (P) and said packed-table index (i_{c}).

3. The method of claim 1, wherein said packed table is generated by concatenating said plurality of look-up tables (T₀ ,T₁, ... Tₙ).

4. The method of claim 1, wherein said permutation (P) is a random permutation.

5. The method of claim 2, wherein said permutation is stored by the execution device as an array comprising the order of the indexes of the packed table in the permuted table and step c1) computes at runtime the permuted index (iₚ) by extracting said permuted index memorized at said packed-table index (i_{c}) in said array.

6. The method of claim 2, wherein said permutation is a predetermined transformation function which transforms the index of each value in the packed table into an index of said value in the permuted table (Tₚ), and step c1) computes at runtime a permuted index (iₚ) by applying said stored transformation function (P) to said packed-table index (i_{c}).

7. A non-transitory machine-readable storage medium encoded with instructions of a secure software code for secure execution by a second processor (21) of an execution device (2), wherein:
• said secure software code is a modified version of an unsecure software code performing a sensitive operation performing accesses to a plurality of look-up tables (T₀ ,T₁, ... Tₙ), said unsecure software code comprising first sequences of instructions performing said accesses,
• the non-transitory machine-readable storage medium is also encoded with:
✔ a permuted table (Tₚ) generated by applying a permutation (P) to a packed table (T) gathering said plurality of look-up tables (T₀ ,T₁, ... Tₙ),
✔ a new sequence of instructions replacing at least one of said first sequences of instructions performing an access to a target value (X) located at a first index (i) in a first look-up table among said plurality of look-up tables, and which, when executed at runtime by the second processor (21) of the execution device (2) :
❖ c1) determines using said permutation (P) a permuted index (iₚ) of the target value (X) in the permuted table,
❖ c2) returns the value memorized at the permuted index in said permuted table (Tₚ).

8. A method of securely executing instructions of a secure software code by a second processor (21) of an execution device (2), wherein:
• said secure software code is a modified version of an unsecure software code performing a sensitive operation performing accesses to a plurality of look-up tables (T₀ ,T₁, ... Tₙ), said unsecure software code comprising first sequences of instructions performing said accesses,
• a permuted table (Tₚ) is generated by applying a permutation (P) to a packed table (T) gathering said plurality of look-up tables (T₀ ,T₁, ... Tₙ), when an access is performed to a target value (X) located at a first index (i) in a first look-up table among said plurality of look-up tables, said method comprises the steps of:
❖ c1) determining (E1) using said permutation (P) a permuted index (iₚ) of the target value (X) in the permuted table (Tₚ),
❖ c2) returning (E2) the value memorized at the permuted index in said permuted table (Tₚ).
